# EUROPEAN PATENT SPECIFICATION

(11) **EP 0 508 169 B1**
(45) Date of publication and mention of the grant of the patent: **17.01.1996**
(21) Application number: 92104653.8
(22) Date of filing: 18.03.1992
(51) Int. Cl.: B60C 1/00

(54) **Tread compounds containing modified EPDM which exhibit good abrasion resistance and improved hysteresis properties**
Modifiziertes EPDM enthaltende Laufflächenmischungen, die gute Abriebwiderstands- und verbesserte Hystereseeigenschaften aufweisen
Composés pour bandes de roulement contenant de l'EPDM modifié et présentant de bonnes propriétés de résistance à l'abrasion et des propriétés améliorées

(30) Priority: 28.03.1991 US 676494
(43) Date of publication of application: 14.10.1992
(73) Proprietor: THE GOODYEAR TIRE & RUBBER COMPANY, Akron, Ohio 44316-0001 (US)
(72) Inventor: Sandstrom, Paul Harry, Tallmadge, Ohio 44278 (US); Beyersdorff, Leland Ellsworth, North Canton, Ohio 44718 (US); Hopper, Roger John, Akron, Ohio 44313 (US)
(74) Representative: Leitz, Paul

(56) References cited:
- EP-A- 0 240 448
- WO-A-90/02765
- US-A- 3 915 907
- QUESTEL TELESYSTEMS (WPIL), DERWENT PUBLICATIONS LTD., London Accession Nr. 90- 366 494 (49)

## Description

### FIELD OF THE INVENTION

The present invention relates to utilizing N-chlorothio-sulfonamide modified EPDM in the tread portion of tires.

### BACKGROUND

Unsaturated rubbery polymers, such as diene type rubbers tend to exhibit poor aging characteristics and poor ozone resistance. These diene rubbers are commonly used in the formation of tire treads. Low unsaturation rubbers such as EPDM may be blended with diene rubbers to improve ozone resistance, but such blends exhibit increased hysteresis and reduced tensile strength and reduced modulus due to poor cure compatibility.

US-A-3,915,907 to Roger J. Hopper, relates to chlorothio-sulfonamide-modified rubbery terpolymers having a low degree of unsaturation, mixtures of such modified terpolymers with highly unsaturated rubbery polymers and vulcanizates of such mixtures. As a result of improved cure compatibility, the vulcanizates showed superior properties and/or are particularly useful in the structure of pneumatic tire sidewalls. The modified rubbery terpolymers are prepared by reacting a terpolymer of ethylene, an α-olefin containing from 3 to 6 carbon atoms, and a non-conjugated diene containing from 6 to 12 carbon atoms with a N-chlorothio-sulfonamide. In a preferred embodiment, where the alpha-olefin is propylene, such terpolymers are commonly known as EPDM rubbers. The incorporation of the chlorothiosulfonamides into low unsaturated rubbery terpolymers can be achieved in a variety of ways such as by direct mixing, incorporation by swelling, or by reaction in solution. The rate of the reaction can be greatly accelerated by conducting it in the presence of a saturated aliphatic carboxylic acid containing from 6 to 30 carbon atoms, such as stearic acid. US-A-4 820 780 and US-A-4 910 266 to Roger J. Hopper relate to the use of such carboxylic acids. EP-A-240 448 discloses a tire sidewall composition comprising a diene rubber and, an EPDM which has been modified to crosslink with the diene rubber. WO-A-90 02765 describes a catalytic process for preparing a N-holothiosulfonamide.

### Summary of the Invention

It is an object of this invention to provide a tire tread made of a rubber composition characterized by being comprised of 25 to 60 parts by weight N-chlorothio-sulfonamide modified ethylene-propylene-diene terpolymer rubber (EPDM) for every 100 parts by weight of one or more tread rubbers and said modified EPDM rubber; wherein said tread rubber(s) are at least one of cis 1,4-polybutadiene, cis 1,4-polyisoprene, SBR and high vinyl polybutadiene where said high vinyl is from 65 to 75 percent of the total microstructure units based on the total number of units in the said polybutadiene; wherein the said EPDM contains 35 to 70 weight percent ethylene and has a crystallinity of less than 25 percent; and wherein said EPDM terpolymer rubber has been modified, with 0.5 to 5 parts, per 100 parts EPDM, of N-chlorothio-sulfonamide selected from N-chlorothio-N-methylbenzene-sulfonamide, N-chlorothio-N-methyl-methanesulfonamide, and N-chlorothio-N-methyl-p-toluenesulfonamide. Cured property results are dramatic in the modified blends of the present invention. An unexpected balance of properties such as lower hysteresis, improved abrasion resistance, and improved skid properties are obtained. In addition, improved antiozonant properties of the modified blends of the present invention also allow the removal of some or all of the amine antiozonant conventionally used, and therefore result in a non-staining tread.

### Detailed Description of the Invention

The tire tread composition of the present invention can contain one or more conventional tread rubber compounds which are generally well known to the art as well as to the literature. Such tread rubber compounds can be made from conjugated dienes having from 4 to 12 carbon atoms with specific examples including butadiene, isoprene, pentadiene, hexadiene, heptadiene, octadiene, 2,3-dimethyl-1,3-butadiene, and 2-methyl-1,3-pentadiene, with butadiene being preferred. Included within the above group of polymers is natural as well as synthetic rubber, that is cis-1,4-polyisoprene wherein the cis content is often above 75 percent, desirably above 85 or 90 percent, and often greater than 95 percent of the total number of microstructure units within the polymer.

Another group of tread rubber compounds are various copolymers (i.e. interpolymers) made from conjugated dienes having from 4 to 12 carbon atoms with specific examples including polybutadiene-isoprene. These dienes copolymers can have various microstructures, such as a cis-1,4 configuration, a trans-1,4 configuration, or a 1,2- configuration. High vinyl polybutadiene is preferred, i.e., a 1,2- configuration.

Another group of tread rubber compounds are various copolymers made from monomers of conjugated dienes having from 4 to 12 carbon atoms such as those listed and discussed herein above, and vinyl substituted aromatic compounds containing 8 to 15 carbon atoms. Specific vinyl substituted aromatic compounds include styrene, alpha-methyl styrene, 4-t-butylstyrene, vinyl toluene, divinyl benzene, isopropenyl benzene and diisopropenyl benzene. A specific and preferred copolymer is random polystyrene-butadiene (SBR). Various block or graft copolymer can also be utilized such as polystyrene-butadiene-styrene and polybutadiene-g-styrene.

Another useful tread rubber is nitrile rubber, that is rubbers which are copolymers made from conjugated dienes having from 4 to 12 carbon atoms with acrylonitrile monomers or alkyl derivatives thereof wherein the alkyl derivative has from 1 to 4 carbon atoms such as methacrylonitrile.

According to the present invention, sulfonamide modified EPDM terpolymers are blended with the tread rubber compounds and have been found to yield unexpected improvements with regard to tread rubber properties. The amount of the modified EPDM rubbers is generally from 20 to 90 parts by weight, desirably from 25 to 60 parts by weight, and preferably from 25 to 40 percent by weight for every 100 parts by weight of the one or more tread rubber compounds and the modified EPDM rubbers. The modified rubbers of the present invention can be made in accordance with US-A-3,915,907, 4,820,780, and 4,910,266, which disclose techniques for modifying rubbery terpolymers with N-chlorothio-sulfonamides. Preferably, the present invention relates to such terpolymers wherein such a modification is conducted in the presence of a saturated aliphatic carboxylic acid containing from 6 to 30 carbon atoms.

The N-chlorothio-sulfonamides utilized to modify terpolymers have the structural formula: 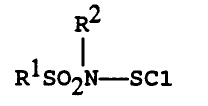
where R¹ and R², independently, are selected from the group consisting of alkyl radicals having 1 to 20 carbon atoms, aralkyl radicals having 7 to 20 carbon atoms, alkaryl radicals having from 7 to 20 carbon atoms, and haloaryl radicals having 6 to 10, carbon atoms and where R¹ is also selected radicals having the formula: 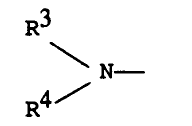
where R³ and R⁴ are, independently, selected from said alkyl, aralkyl, and haloaryl radicals having from 1 to 20 carbon atoms and where R³ and R⁴ can be joined together to represent radicals selected from 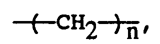
where n is an integer of 4 to 7, and 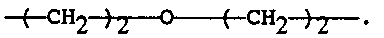
In these N-chlorothio-sulfonamides, R¹ and R² are preferably selected from alkyl radicals having 1 to 6 carbon atoms, phenyl radicals, monoalkyl substituted phenyl radicals having from 7 to 10 carbon atoms and dialkyl substituted phenyl radicals having from 8 to 11 carbon atoms. Representative of the radicals suitable for R¹ are radicals selected from methyl, tert-butyl, cyclohexyl, 2-eicosyl, benzyl, 2-(p-n-undecylphenyl)-2-propyl, phenyl, 1-naphthyl, p-tolyl, 3-ethyl-4-(n-dodecyl)phenyl, p-chlorophenyl and 3-chloro-4-(n-butyl)phenyl radicals. Most preferably R¹ and R² are methyl groups, ethyl groups, propyl groups, butyl groups, phenyl groups, para-tolyl groups, and p-chlorophenyl groups.

Representative examples of N-chlorothio-sulfonamides which can be used in the present invention include N-chlorothio-N-methyl-methanesulfonamide, N-chlorothio-N-methylbenzenesulfonamide, N-chlorothio-N-methyl-p-toluenesulfonamide, N-chlorothio-N-ethyl-p-toluenesulfonamide, N-chlorothio-N-methyl-ethanesulfonamide, N-chlorothio-N-phenyl-p-toluenesulfonamide, N-chlorothio-N-(2-propyl)-methanesulfonamide, N-chlorothio-N-(1-propyl)-methanesulfonamide, N-chlorothio-N-(1-propyl)-p-chlorobenzenesulfonamide, N-chlorothio-N-phenyl-methanesulfonamide, N-chlorothio-N,N',N'-trimethylsulfamide, N-chlorothio-N-methyl-N',N'-(pentamethylene) sulfamide, N-chlorothio-N-methyl-N',N-diethylsulfamide and N-chlorothio-N-phenyl-benzenesulfonamide. N-chlorothio-N-methylbenzenesulfonamide is preferred, as well as N-chlorothio-N-methyl-methanesulfonamide and N-chlorothio-N-methyl-p-toluenesulfonamide
Chlorothio-sulfonamides suitable for use in the present invention, as well as their preparation, have further been described in the patent literature. For example, DE-B-1,156,403, discloses the preparation of chlorothio-sulfonamides by reaction of a sulfonamide with SCl₂ in the presence of an organic acid acceptor, and DE-B-1,101,407 discloses the preparation of chlorothio-sulfonamides from N,N'-dithiobis(sulfonamides) and chlorine or sulfuryl chloride. The chlorothio-sulfonamides of the present invention can be prepared by analogous procedures.

The rubbery terpolymer is an ethylene-propylene diene terpolymer (EPDM). The unmodified EPDM of this invention includes terpolymers and tetrapolymers. Thus, the EPDM will comprise ethylene, one or more alpha-olefins, and one or more diene monomers, and can be substantially amorphous, and can have a substantially random arrangement of at least the ethylene and the alpha-olefin monomers. The EPDM, prior to modification with sulfonamides, will generally have a weight average molecular weight in the range of between 10,000 and 1 million or higher, typically between 15,000 and 500,000, and more typically between 20,000 and 350,000.

EPDM generally has a degree of crystallinity less than about 25 percent, preferably less than about 15 percent, and more preferably less than about 10 percent as measured by means known to the those skilled in the art. This degree of crystallinity is known by those skilled in the art to be "substantially amorphous."

EPDM useful in this invention will contain 20 to 90 weight percent ethylene, preferably 30 to 85 weight percent ethylene, and more preferably 35 to 70 weight percent ethylene.

Alpha-olefin, suitable for use in the preparation of the EPDM, preferably have from 3 to 16 carbon atoms. Examples of such alpha-olefins include propylene, 1-butene, 1-pentene, 1-hexene, 1-octene, and 1-dodecene. The alpha-olefin content of the EPDM prior to modification is generally 10 to 80 weight percent, and preferably from 20 to 70 weight percent. The preferred alpha-olefin is propylene.

The amount of N-chlorothio-sulfonamide needed to modify a given terpolymer depends upon a number of factors including the specific nature of the terpolymer being modified and the characteristics desired for the final vulcanizate. As a general rule from about 0.1 to about 10 phr (parts per hundred parts of rubber terpolymer) of the N-chlorothio-sulfonamide will be utilized. In most cases it will be preferred to utilized from about 0.5 to 5 phr of the N-chlorothio-sulfonamide modifier. As a general rule, the molar ratio of modifier to unsaturated sites in the polymer will be within the range of 0.03/1 to 1/1, but is preferably in the range of 0.15/1 to 0.8/1 and more preferably 0.2/1 to 0.7/1. With some EPDM polymers, the use of high ratios can lead to polymer viscosity increases which make processing exceedingly difficult or even practically unmanageable. It is expected that, recognizing this, those having ordinary skill in the polymer compounding art will use a ratio which enhances characteristics of the final vulcanized blend without detrimentally increasing polymer viscosity beyond the point of ease of processability.

The amount of the saturated aliphatic carboxylic acid utilized in the modification procedures of the present invention will generally be within the range of 0.1 to 10 phr (terpolymer). It will normally be preferred for the amount of saturated aliphatic carboxylic acid utilized to be within the range of 1 to 6 phr with 3 to 4 phr being most preferred. The saturated aliphatic carboxylic acids which are utilized in the modification procedures of this invention contain from 6 to 30 carbon atoms and preferably from 10 to 28 carbon atoms. The most preferred saturated aliphatic carboxylic acids will contain from 12 to 20 carbon atoms. The saturated aliphatic carboxylic acids utilized will be saturated and will accordingly be of the formula CₙH₂ₙ₊₁COOH, wherein n is an integer from 5 to 29. Palmitic acid, lauric acid, and stearic acid are representative examples of saturated aliphatic carboxylic acids of this type. Branched saturated aliphatic carboxylic acids containing from 6 to 30 carbon atoms, such as 2-ethylhexanoic acid, can also be utilized to accelerate the modification reaction.

The modifications of the EPDM terpolymer will preferably be carried out in an internal mixer, such as a Banbury mixer or an extruder. Such modifications are carried out by simply mixing the saturated aliphatic carboxylic acid and the N-chlorothio-sulfonamide modifier throughout the rubbery terpolymer being modified. Such modifications are normally conducted at an elevated temperature which is within the range of 60°C to about 190°C. It is generally preferable for such modification procedures to be carried out at a temperature which is within the range of 100°C to 170°C with temperatures within the range of 110°C to 160°C being most preferred.

The saturated aliphatic carboxylic acids utilized in accordance with this invention accelerate the modification process by promoting the addition of chlorosulfamides to the EPDM, to the degree necessary for such modifications to be carried out in extruders having typical residence times. For instance, the modification reaction can be carried out at a rate that makes practical the utilization of extruders having residence times of 90 seconds or even less.

Unreacted modifier can react with water to produce hydrochloric acid as a reaction by-product. Hydrochloric acid typically has an adverse effect on extruders and other processing equipment. It also typically has an adverse effect on the properties of the rubber being prepared. For these reasons, it is usually advantageous to carry out the modification procedures of this invention in the presence of an agent which will react with the hydrochloric acid produced to form a salt. For instance, calcium carbonate can be added which will react with hydrochloric acid produced so as to form calcium chloride. It is normally desirable to utilize from 0.001 to 1 phr of calcium carbonate in the modification procedures of this invention. It will generally be preferred to utilize from 0.01 to 0.5 phr of calcium carbonate in such modification procedures with the utilization of 0.02 to 0.1 phr of calcium carbonate being most preferred.

The sulfonamide modified EPDM terpolymers of the present invention are blended with the one or more tread rubber compounds in any conventional manner such as in a Banbury, extruder, and the like. The mixing temperature ranges from 66°C to 149°C (150°F to 300°F), and is preferably from 73°C to 121°C (200°F to 250°F).

Various conventional rubber compounding additives can be utilized as known to those skilled in the art as well as to the literature. Such additives can include conventional amounts of activators, retarders, vulcanizing and curing agents; protective materials including antioxidants, antiozonants, antiblocking agents, antiflex cracking agents, flame retarders, fungicides, germicides, antistatic agents and chemical and heat stabilizers; processing materials including plasticizers and softeners, processing aids and tackifiers; extenders, fillers and reinforcing materials. Standard compounding ingredients include zinc oxide, carbon black, sulfur, oil and fatty acids.

Tires generally have a pneumatic tire casing of toroidal shape with an outer tread portion being connected to spaced beads by a sidewall. The cured sidewall inherently requires various properties in order to perform adequately. Such properties include low heat build-up, a low modulus, good flexibility, low structure carbon black, a low Tg polymer content, and the like. In distinct contrast thereto, the cured tread portion of the tire is radically different in that it inherently requires a high modulus, lower flex than a sidewall, high structure carbon black, a high Tg polymer, good abrasion resistance, and generally is not concerned with heat build-up. Moreover, tire treads require good wearability, good abrasion resistance, good resistance to aging and ozone and a low hysteresis for reduced rolling resistance. It was therefore unexpected that the use of the above-described sulfonamide modified EPDM, when utilized in the tread portion of the tire, retained or improved aging and ozone resistance, skid resistance, lower hysteresis, as well as improved abrasion resistance. Typically, tires require amine-based antioxidants in the tread portion of the tire. The anti-oxidants have a tendency to migrate into the sidewall and stain the sidewall. It has been found that with the use of the above-noted modified EPDM the amount of amine antiozonant which is generally required is reduced or eliminated and thus generally produces a non-staining tire tread.

A further advantage of the current invention is the production of a continuous construction between the sidewall and tread portion of the tire. This eliminates a potential weak point that generally results in cracking at the interface of the tread and sidewall when modified EPDM is not present in both portions.

The invention is illustrated by the examples.

### Example 1

### Preparation of Modified EPDM

Modified Nordel 2744® was prepared in a BR Banbury internal mixer (Farrel Corp.) according to the following procedure. The EPDM utilized in this experiment was a RTM, DuPont Nordel 2744® with a Tg of about -51.2°C. With the rotors at 40 rpm, 497.5 g of Nordel 2744, 35g of stearic acid, 0.20g of calcium carbonate and and another 497.5g of Nordel 2744 were added sequentially. The ram was lowered and the rotor speed increased to raise the batch temperature to 135°C, whereupon 33g of N-chlorothio-N-methyl-p-toluene-sulfonamide was added. Mixing was continued for 6 minutes while controlling the temperature at 135°C by adjusting the rotor speed. The batch was then discharged and sheeted out on a two-roll mill at ambient temperature.

### Example 2

Rubber compositions containing the materials set out in Table I were prepared in a BR Banbury mixer using two separate stages of addition. Table II sets out the cure behavior and vulcanizate properties of several polymer blends which contain cis-1,4-polybutadiene (BUD 1207®) and Nordel 2744® EPDM and also cis-1,4-polybutadiene blended with the modified EPDM described in Example 1. The replacement of the unmodified Nordel 2744® EPDM (Test Samples A and C) with the modified EPDM (Test Samples B and D) in blends with 30 or 50 phr cis-1,4-polybutadiene provides higher modulus, higher rebound and improved Pico abrasion resistance. These properties are critical for application of an EPDM polymer in a tire tread compound. Improvements in ozone resistance and aged or weathering properties are also expected as a result of the modified EPDM being present in the blend composition.

### Example 3

Rubber compositions containing the materials set out in Table I were prepared in a BR Banbury using two separate stages of addition. Table III sets out the cure behavior and vulcanizate properties of polymer blends which contain natural rubber blended with Nordel 2744® EPDM or with modified EPDM and solution SBR blended with Nordel 2744® EPDM or with modified EPDM. The replacement of the unmodified Nordel 2744® EPDM (Test Samples E and G) with the modified EPDM (Test Samples F and H) in blends with 50 phr natural rubber or 50 phr solution SBR provides higher modulus, higher rebound and improved Pico abrasion resistance. These properties are critical for application of an EPDM polymer in a tire tread compound. Improvements in ozone resistance and aged or weathering properties are also expected as a result of the modified EPDM being present in the blend composition.

### Example 4

Rubber compositions containing the materials set out in Table I were prepared in a BR Banbury using two separate stages of addition. Table IV sets out the cure behavior and vulcanizate properties of polymer blends which contain high vinyl PBD blended with Nordel 2744® EPDM or with modified EPDM and natural rubber and Shell 901® blended with Nordel 2744® EPDM or modified EPDM. The replacement of the unmodified Nordel 2744® EPDM (Test Samples I and K) with the modified EPDM (Test Samples J and L) in blends with 50 phr high vinyl PBD or 60 phr of natural rubber and 20 phr Shell 901® provides higher modulus, higher rebound and improved Pico abrasion resistance. These properties are critical for application of an EPDM polymer in a tire tread compound. Improvements in ozone resistance and aged or weathering resistance are also expected as a result of the modified EPDM being present in the blend composition.

### Summary of Examples 2-5

A summary of the key physical properties for the modified EPDM containing compounds is shown in Table V. All of the compounds exhibit reasonable cured properties for consideration as tread compounds. The best properties when considered for tread performance (treadwear, skid resistance, rolling resistance and handling) are shown by Sample J. The combination of high vinyl PBD and modified EPDM are predicted from lab data to provide the best performance as a tread compound.

**TABLE I**

| Material | Weight Parts | Banbury Stage |
|---|---|---|
| Polymer | 100.0 | 1 |
| Carbon Black * | 45.0 | 1 |
| Processing Oil ** | 9.0 | 1 |
| Wax | 1.0 | 1 |
| Antidegradants | 3.0 | 1 |
| Zinc Oxide | 3.0 | 2 |
| Accelerators | 1.12 | 2 |
| Sulfur | 1.6 | 2 |

| | | |
|---|---|---|
| * ISAF (ASTM N-220) | | |
| ** Naphthenic/paraffinic oil | | |

**TABLE II**

| Cure Behavior and Vulcanizate Properties | | | | |
|---|---|---|---|---|
| | A (Control) | B | C (Control) | D |
| BUD 1207® | 30.0 | 30.0 | 50.0 | 50.0 |
| Nordel 2744® | 70.0 | 0 | 50.0 | 0 |
| Modified EPDM | 0 | 70.0 | 0 | 50.0 |

| Rheometer, 150°C | | | | |
|---|---|---|---|---|
| Max Torque | 22.8 | 42.0 | 26.4 | 38.0 |
| Min Torque | 8.5 | 10.7 | 8.4 | 9.9 |
| Delta Torque | 14.3 | 31.3 | 18.0 | 29.0 |
| t₉₀, minutes | 27.4 | 35.2 | 37.5 | 40.0 |

| Stress Strain | | | | |
|---|---|---|---|---|
| Tensile Strength, MPa | 9.8 | 23.7 | 10.1 | 13.4 |
| Elongation at Break% | 430 | 280 | 345 | 315 |
| 300% Modulus, MPa | 7.7 | - | 7.9 | 12.6 |

| Pendulum Skid | | | | |
|---|---|---|---|---|
| Dry Asphalt | 80 | 81 | 79 | 79 |
| Wet Asphalt | 46 | 40 | 53 | 54 |
| Dry Concrete | 90 | 84 | 92 | 87 |
| Wet Concrete | 66 | 44 | 62 | 59 |

| Pico Abrasion | | | | |
|---|---|---|---|---|
| Index Value | 56% | 154% | 70% | 122% |

| Rebound | | | | |
|---|---|---|---|---|
| Cold, % (RT) | 61.5 | 63.6 | 57.0 | 59.0 |
| Hot, % (100°C) | 52.0 | 71.8 | 59.0 | 71.8 |

| Vibrotest, 100°C | | | | |
|---|---|---|---|---|
| Dynamic Modulus, MPa | 7.63 | 9.01 | 7.88 | 8.49 |
| Dynamic Resilience, % | 48.2 | 42.8 | 28.1 | 41.5 |

**TABLE III**

| Cure Behavior | | | | |
|---|---|---|---|---|
| | E (Control) | F | G (Control) | H |
| Natural Rubber | 50.0 | 50.0 | 0 | 0 |
| Solution SBR * | 0 | 0 | 50.0 | 50.0 |
| Nordel 2744 ® | 50.0 | 0 | 50.0 | 0 |
| Modified EPDM | 0 | 50.0 | 0 | 50.0 |

| Rheometer, 150°C | | | | |
|---|---|---|---|---|
| Max Torque | 25.0 | 38.5 | 26.5 | 39.3 |
| Min Torque | 6.4 | 8.0 | 9.5 | 10.7 |
| Delta Torque | 18.6 | 30.5 | 17.0 | 28.6 |
| t₉₀, minutes | 15.5 | 18.5 | 38.7 | 42.7 |

| Stress Strain | | | | |
|---|---|---|---|---|
| Tensile Strength, MPa | 13.0 | 20.0 | 10.5 | 14.4 |
| Elongation at Break% | 475 | 410 | 325 | 300 |
| 300% Modulus, MPa | 9.0 | 13.0 | 9.6 | 14.4 |

| Pendulum Skid | | | | |
|---|---|---|---|---|
| Dry Asphalt | 79 | 80 | 79 | 83 |
| Wet Asphalt | 46 | 45 | 51 | 51 |
| Dry concrete | 90 | 92 | 90 | 90 |
| Wet Concrete | 54 | 53 | 53 | 56 |

| Pico Abrasion | | | | |
|---|---|---|---|---|
| Index Value | 73 | 135 | 75 | 127 |

| Rebound | | | | |
|---|---|---|---|---|
| Cold, % (RT) | 61.0 | 62.0 | 58.5 | 61.0 |
| Hot, % (100°C) | 56.0 | 73.6 | 59.0 | 73.0 |

| Vibrotest | | | | |
|---|---|---|---|---|
| Dynamic Modulus, MPa | 6.98 | 8.11 | - | 7.3 |
| Dynamic Resilience, % | 41.1 | 43.2 | - | 28.1 |

| | | | | |
|---|---|---|---|---|
| * Contains 10% bound styrene | | | | |

**TABLE IV**

| Cure Behavior and Vulcanizate Properties | | | | |
|---|---|---|---|---|
| | I (Control) | J | K (Control) | L |
| High Vinyl PBD* | 50 | 50 | 0 | 0 |
| Natural Rubber | 0 | 0 | 60 | 60 |
| Shell 901® | 0 | 0 | 20 | 20 |
| Nordel 2744® | 50 | 0 | 20 | 0 |
| Modified EPDM | 0 | 50 | 0 | 20 |

| Rheometer, 150°C | | | | |
|---|---|---|---|---|
| Max Torque | 27.0 | 39.0 | 28.1 | 33.0 |
| Min Torque | 8.1 | 9.5 | 5.7 | 5.9 |
| Delta Torque | 18.9 | 29.5 | 22.4 | 27.1 |
| t₉₀, minutes | 49.0 | 48.5 | 13.1 | 15.9 |

| Stress Strain | | | | |
|---|---|---|---|---|
| Tensile Strength, MPa | 10.6 | 14.5 | 17.8 | 20.4 |
| Elongation at Break% | 310 | 290 | 520 | 470 |
| 300% Modulus, MPa | 10.0 | - | 9.5 | 11.4 |

| Pendulum Skid | | | | |
|---|---|---|---|---|
| Dry Asphalt | 79 | 80 | 85 | 85 |
| Wet Asphalt | 51 | 50 | 53 | 52 |
| Dry Concrete | 90 | 84 | 94 | 94 |
| Wet Concrete | 54 | 59 | 59 | 59 |

| Pico Abrasion | | | | |
|---|---|---|---|---|
| Index Value | 72 | 140 | 74 | 109 |

| Rebound | | | | |
|---|---|---|---|---|
| Cold, % (RT) | 57.0 | 59.0 | 64.7 | 63.1 |
| Hot, % (100°C) | 60.0 | 73.0 | 69.0 | 74.6 |

| Vibrotest | | | | |
|---|---|---|---|---|
| Dynamic Modulus, MPa | 8.1 | 8.9 | 5.9 | 6.3 |
| Dynamic Resilience, % | 30.2 | 47.2 | 38.9 | 43.1 |

| | | | | |
|---|---|---|---|---|
| * Nippon Zeon BR 1245® | | | | |

**TABLE V**

| Comparison of Key Physical Properties | | | | |
|---|---|---|---|---|
| | B | D | F | H |
| Natural Rubber | 0 | 0 | 50 | 0 |
| Solution SBR | 0 | 0 | 0 | 50 |
| High Vinyl PBD* | 0 | 0 | 0 | 0 |
| Shell 901 | 0 | 0 | 0 | 0 |
| Modified EPDM | 70 | 50 | 50 | 50 |
| BUD 1207® | 30 | 50 | 0 | 0 |
| 300% Modulus, MPa | - | 12.6 | 13.0 | 14.4 |
| Wet Concrete Skid** | 44 | 59 | 53 | |
| Pico Abrasion Index** | 154 | 122 | 135 | 127 |
| Hot Rebound, % | 71.8 | 71.8 | 73.6 | 73.0 |
| Dynamic Modulus, MPa | 9.01 | 8.49 | 8.11 | |

| | J | L | | |
|---|---|---|---|---|
| Natural Rubber | 0 | 60 | | |
| Solution SBR | 0 | 0 | | |
| High Vinyl PBD* | 50 | 0 | | |
| Shell 901 | 0 | 20 | | |
| Modified EPDM | 50 | 20 | | |
| BUD 1207® | 0 | 0 | | |
| 300% Modulus, MPa | - | 11.4 | | |
| Wet Concrete Skid** | 59 | 59 | | |
| Pico Abrasion Index** | 140 | 109 | | |
| Hot Rebound, % | 73.0 | 74.6 | | |
| Dynamic Modulus, MPa | 8.9 | 6.3 | | |

| | | | | |
|---|---|---|---|---|
| * Nippon Zeon BR 1245® (70-75% vinyl structure) | | | | |
| ** Higher values represent improvements in wet skid and abrasion resistance. | | | | |

## Claims

1. A tire tread made of a rubber composition characterized by being comprised of 25 to 60 parts by weight N-chlorothio-sulfonamide modified ethylene-propylene-diene terpolymer rubber (EPDM) for every 100 parts by weight of one or more tread rubbers and said modified EPDM rubber; wherein said tread rubber(s) are at least one of cis 1,4-polybutadiene, cis 1,4-polyisoprene, SBR and high vinyl polybutadiene where said high vinyl is from 65 to 75 percent of the total microstructure units based on the total number of units in the said polybutadiene; wherein the said EPDM contains 35 to 70 weight percent ethylene and has a crystallinity of less than 25 percent; and wherein said EPDM terpolymer rubber has been modified, with 0.5 to 5 parts, per 100 parts EPDM, of N-chlorothio-sulfonamide selected from N-chlorothio-N-methylbenzene-sulfonamide, N-chlorothio-N-methyl-methanesulfonamide, and N-chlorothio-N-methyl-p-toluenesulfonamide.

## Patentansprüche

1. Reifenlauffläche, die aus einer Kautschukzusammensetzung hergestellt ist, die dadurch gekennzeichnet ist, daß sie pro 100 Gewichtsteile eines oder mehrerer Laufflächenkautschuke und des modifizierten EPDM-Kautschuks 25 bis 60 Gewichtsteile mit N-Chlorthiosulfonamid modifizierten Ethylen-Propylen-Dien-Terpolymer-Kautschuk (EPDM) umfaßt; worin der/die Laufflächenkautschuk(e) mindestens einer ist/sind aus cis-1,4-Polybutadien, cis-1,4-Polyisopren, SBR und Polybutadien mit hohem Vinylgehalt, wobei der hohe Vinylgehalt, bezogen auf die Gesamtzahl von Einheiten im Polybutadien, 65 bis 75 Prozent der gesamten Mikrostruktureinheiten beträgt; worin das EPDM 35 bis 70 Gewichtsprozent Ethylen enthält und eine Kristallinität von weniger als 25 Prozent aufweist; und worin der EPDM-Terpolymer-Kautschuk pro 100 Teile EPDM mit 0,5 bis 5 Teilen N-Chlorthiosulfonamid, ausgewählt aus N-Chlorthio-N-methylbenzolsulfonamid, N-Chlorthio-N-methylmethansulfonamid und N-Chlorthio-N-methyl-p-toluolsulfonamid, modifiziert worden ist.

## Revendications

1. Bande de roulement pour bandage pneumatique, réalisée à partir d'une composition de caoutchouc caractérisée par le fait qu'elle comprend de 25 à 60 parties en poids de caoutchouc terpolymère d'éthylène-propylène-diène (EPDM) modifié à l'aide de N-chlorothiosulfonamide pour 100 parties en poids respectivement d'un ou de plusieurs caoutchoucs de bande de roulement et dudit caoutchouc EPDM modifié; dans laquelle le ou lesdits caoutchoucs de bande de roulement sont choisis parmi au moins un caoutchouc du groupe comprenant le cis-1,4-polybutadiène, le cis-1,4-polyisoprène, le SBR et le polybutadiène à teneur vinylique élevée, dans lequel ladite teneur vinylique élevée représente de 65 à 75 pour cent du nombre total des unités de microstructures basé sur le nombre total d'unités dans ledit polybutadiène; dans laquelle ledit EPDM contient de 35 à 70 pour cent en poids d'éthylène et possède une cristallinité inférieure à 25 pour cent; et dans laquelle ledit caoutchouc terpolymère EPDM a été modifié à l'aide de 0,5 à 5 parties, par 100 parties de EPDM, de N-chlorothiosulfonamide choisi parmi le groupe comprenant le N-chlorothio-N-méthylbenzène-sulfonamide, le N-chlorothio-N-méthylméthanesulfonamide et le N-chlorothio-N-méthyl-p-toluènesulfonamide.
